Europäisches Patentamt

European Patent Office

Office européen des brevets

(11) Veröffentlichungsnummer: **0 073 516**
**B1**

(12) # EUROPÄISCHE PATENTSCHRIFT

(45) Veröffentlichungstag der Patentschrift:
22.05.85

(21) Anmeldenummer: 82107976.1

(22) Anmeldetag: 31.08.82

(51) Int. Cl.⁴: **C 04 B 38/02, C 04 B 24/24**

(54) **Verfahren zur Herstellung einer porenhaltigen Masse auf der Basis eines hydraulischen Bindemittels.**

(30) Priorität: 02.09.81 DE 3134682

(43) Veröffentlichungstag der Anmeldung:
09.03.83 Patentblatt 83/10

(45) Bekanntmachung des Hinweises auf die Patenterteilung:
22.05.85 Patentblatt 85/21

(84) Benannte Vertragsstaaten:
AT BE CH DE FR GB IT LI NL SE

(56) Entgegenhaltungen:
DE - A - 2 247 535
DE - A - 2 527 830
DE - B - 1 029 278
GB - A - 2 017 673

(73) Patentinhaber: BASF Farben + Fasern
Aktiengesellschaft, Am Neumarkt 30,
D-2000 Hamburg 70 (DE)

(72) Erfinder: Augustin, Friedrich, Lindenbuschweg 101,
D-5020 Frechen (DE)

(74) Vertreter: Habbel, Hans-Georg, Dipl.-Ing.,
Postfach 3429 Am Kanonengraben 11, D-4400 Münster
(DE)

## Beschreibung

Die Erfindung betrifft ein Verfahren zur Herstellung einer druckfrei und porenhaltig härtenden wässerigen Masse auf der Basis eines hydraulischen Bindemittels, eines Treibmittels und eines Kunstharzes.

Es ist bekannt, aus einem flüssigen Feinmörtel, der mit einem Treibmittel aufgebläht und durch Dampfbehandlung im Autoklaven gehärtet wird, Gasbeton herzustellen. Gasbeton ist starr und seine Herstellung im Autoklaven aufwendig. Durch diese Eigenschaften sind die Einsatzmöglichkeiten von Gasbeton begrenzt. Für viele Anwendungen ist es wünschenswert, porenhaltige Massen zu verwenden, die eine gewisse Flexibilität aufweisen und die ohne Anwendung eines Autoklaven an ihrem Einsatzort herstellbar sind.

Aus der DE-B Nr. 1 029 278 ist ein Verfahren zur Herstellung von formbaren, hydraulisch abbindenden porösen Massen für die Erzeugung von Bauelementen aus Mischungen von mineralischen Stoffen, Bindemitteln und Wasser unter Benutzung eines gasförmigen Treibmittels bekannt, das geringe Mengen eines thermoplastischen Kunstharzes, insbesondere Polyvinylharz in wässeriger Dispersion in Mengen unter 0,5 Gew.-% zugesetzt enthält. Die in dieser Zementmischung enthaltenen Gasblasen müssen zumindest während eines Teiles des Treibvorganges einer periodisch wechselnden Kompression und Expansion unterworfen werden, damit ein gleichmässig abgebundener poröser Formkörper, der für Bauelemente geeignet ist, erhalten werden kann.

Eine ähnliche Zementmischung wird in der GB-A Nr. 2 017 673 beschrieben. Nur wird hier das Polyvinylharz als feinverteiltes Pulver in einer Menge zwischen 0,1 und 20 Gew.-% zugemischt. Diese Zementmischung enthält ausserdem noch Glashohlkugeln. Die bekannten Massen haben weitgehend Charakter von Zementmischungen.

Es war daher Aufgabe der Erfindung, ein Verfahren anzugeben, nach dem flexible porenhaltige Massen ohne Anwendung von Druck hergestellt werden können. Dabei sollen die Flexibilität, die Aushärtezeit, die Porosität und die Dichte der erhaltenen Massen in weiten Grenzen variierbar sein.

Diese Aufgabe wird bei einem Verfahren zur Herstellung einer druckfrei und porenhaltig härtenden wässerigen Masse ohne körnige Mörtelzuschlagstoffe durch Mischen einer Komponente A auf Basis eines hydraulischen Bindemittels und eines bei alkalischem pH-Wert gasabspaltenden Treibmittels mit einer Komponente B auf Basis eines Kunstharzes dadurch gelöst, dass eine Komponente B auf Basis einer wässerigen alkalischen Kunstharzdispersion mit einem Festkörpergehalt von wenigstens 50 Gew.-% verwendet wird mit der Massgabe, dass auf 1 Teil der Komponente A 0,5 bis 5 Gew.-Teile der Komponente B kommen.

Aus den Komponenten A und B entsteht ein selbstaufschäumendes Gemisch, das nach dem Aushärten eine flexible, porenhaltige Masse bildet.

Als hydraulisches Bindemittel wird vorteilhaft Zement, insbesondere eine Mischung aus Tonerdeschmelzzement und Portlandzement, verwendet.

Ein erhöhter Anteil an Tonerdeschmelzzement verlängert die Aufschäumzeit und verkürzt die Zeit bis zur Erreichung der Endfestigkeit. Bei einer gegebenen Zusammensetzung kann beispielsweise die Aufschäumzeit von 5 bis 10 min auf ca. 1 h ausgedehnt werden. Die Endfestigkeit wird dann nach 2 h erreicht. Bei erhöhtem Anteil an Portlandzement ergibt sich eine kürzere Aufschäumzeit, und die Zeit bis zur endgültigen Aushärtung kann auf bis zu 24 h ausgedehnt werden. Durch die Verwendung von Normzementen in verschiedenen Festigkeitsklassen können die Aufschäum- und Aushärtungszeit sowie die erreichbare Endfestigkeit beeinflusst werden.

Andere geeignete hydraulische Bindemittel sind Mischbinder, Putz- und Mauerbinder sowie hydraulisch erhärtende Kalke. Unter Mischbindern werden Gemische aus hydraulischen und puzzolanischen Stoffen, wie Hüttensand oder Trass, und Anregern (Portlandzementklinker, Weisskalkhydrat, Dolomitkalkhydrat) verstanden. Putz- und Mauerbinder sind Gemische aus Zement und Steinmehlen, die zur Verbesserung ihrer Verarbeitungseigenschaften Zusatzmittel, z.B. Luftporenbildner, enthalten.

Als gasabspaltendes Treibmittel wird vorteilhaft Aluminiumpulver verwendet. Andere geeignete Treibmittel sind beispielsweise Magnesiumpulver oder anorganische und organische Verbindungen, die in alkalischem wässerigem Medium Gase, wie z.B. Wasserstoff, Sauerstoff, Stickstoff, Kohlendioxid u. dgl., abspalten.

Geeignete Dispersionen sind solche auf der Basis von Polyvinylestern, Polyacrylsäureestern, Polymethacrylsäureestern, Polystyrol, Polyvinylchlorid, Polyvinylidenchlorid, Polyfumar- und Polymaleinsäureestern und Copolymerisaten, wie z.B. Styrol/Butadien-Copolymerisaten. Besonders bevorzugt werden anionische Dispersionen eines Acryl- und/oder Methacrylsäureestercopolymerisats, das neben Acrylsäure und/oder Methacrylsäure Styrol und/oder Polybutadien als Comonomere enthält. Zu den bevorzugten Dispersionen zählen auch solche auf der Basis von Copolymerisaten und Terpolymerisaten des Vinylacetats und des Vinylpropionats mit weiteren Comonomeren. Durch die verwendete Dispersion lassen sich die Härte und die Elastizität der herzustellenden Massen beeinflussen. Dispersionstypen mit einem weichen Polymerisat ergeben weiche und elastische Massen, während härtere Polymerisate harte und zähe bis spröde Massen ergeben.

Vorteilhaft enthalten die Komponenten A und/oder B Kunststoff-, Cellulose-, Stahl-, Glas- und/oder Asbestfasern. Durch den Zusatz dieser Fasern werden die Festigkeitseigenschaften und die Formgebungsmöglichkeiten der Massen vorteilhaft beeinflusst.

Vorteilhaft enthalten die Komponenten A und/oder B anorganische und/oder organische Pigmente. Hierdurch wird je nach Verwendungszweck eine ansprechende Einfärbung der Massen erreicht.

Vorteilhaft enthalten die Komponenten A und/oder B Verdickungsmittel und/oder Stabilisierungsmittel. Als Verdickungs- und Stabilisierungsmittel ist beispielsweise Methylcellulose mittlerer Viskosität geeignet. Es können auch andere Cellulosetypen eingesetzt werden, die gegenüber mehrwertigen Metallionen stabil sind. Weiterhin können Polyvinylalkohol, synthetische Verdicker auf der Basis von Polyacrylaten oder Polyurethanen und natürliche Verdicker wie Kasein oder Stärke verwendet werden. Je nach Fliessverhalten des Verdickers entstehen unterschiedliche Konsistenzen der erhärtenden Masse. Diese beeinflussen die Stabilität und die Ausbreitung der aufschäumenden Massen sowie die Verarbeitbarkeit des Materials.

Vorteilhaft enthält die Komponente A 2,5 bis 5 Gew.-% Natriumaluminat. Hierdurch kann die Aufschäum- und Aushärtezeit in weiten Grenzen gesteuert werden. Bei einer gegebenen Zusammensetzung kann diese Zeit beispielsweise von ca. 5 bis zu ca. 60 min ausgedehnt werden.

Die Komponente A enthält vorteilhaft 1 bis 5 Gew.-% Kalkhydrat. Hierdurch kann das Aufschäumvolumen beeinflusst und bis zum zehnfachen des Mischungsvolumens erhöht werden.

Das Mischungsverhältnis der Komponenten A und B kann in weiten Grenzen variiert werden. Es werden 1 Gew.-teil der Komponente A mit 0,5 bis 5 Gew.-Teilen der Komponente B gemischt. Das Mischungsverhältnis beeinflusst unter anderem die Aushärtezeit und das Endvolumen der ausgehärteten Masse.

Der alkalische pH-Wert der Komponente B kann durch Natronlauge, Ammoniak, Soda oder geeignete alkalische Amine eingestellt werden. Durch geringe Mengen Alkali werden eventuell vorhandene freie Säuregruppen beispielsweise des Kunstharzes oder Säuregruppen von Emulgatoren neutralisiert.

Die Erfindung betrifft auch die porenhaltige Masse, die nach dem erfindungsgemässen Verfahren erhalten worden ist.

Die Erfindung betrifft auch die Verwendung der erfindungsgemässen Masse als Baustoff, als Füllmasse für Hohlräume, als Wärme- und Schalldämmasse, als Unterbodenschutz für Fahrzeuge und als Dränmaterial.

Die mit dem erfindungsgemässen Verfahren hergestellte Masse weist folgende Vorteile auf: Wie bereits beschrieben, können die Eigenschaften der aushärtenden und der ausgehärteten Masse, nämlich die Aufschäumzeit, die Aushärtezeit, die Härte und Elastizität, das Aufschäumvolumen, die Porosität, die Zellstruktur, die Dichte und dergleichen, durch die Zusammensetzung und das Mischungsverhältnis der Komponenten A und B in weiten Grenzen variiert werden. Die Masse haftet gut auf mineralischen und organischen Untergründen sowie auf Metallen und Kunststoffen. Sie hat gute Wärmedämm- und Schallabsorptionseigenschaften. Sie ergibt auf Metall einen guten Korrosionsschutz und ist ferner schwer entflammbar und nicht abtropfend sowie feuerhemmend, witterungs- und alterungsbeständig.

Die Aufbringung der Masse kann bei kleinen Flächen durch Spachteln von Hand oder bei grossen Flächen durch geeignete Spritzförderschneckengeräte erfolgen. Sie kann ebenso in Formen eingefüllt werden.

Die Anwendungsgebiete für die Masse sind sehr vielfältig. So lassen sich mit ihr weiche elastische oder harte zähe Hohlraumausfüllungen im Hoch- und Tiefbau ausführen. Mittels geeigneter Formen können weiche und harte Leichtbauplatten mit guten Wärmedämmeigenschaften und guter Schallabsorption erstellt werden. Die Masse ist geeignet als Trittschalldämmung bei Estrichböden und zur Belegung von Dachflächen als Wärmedämmung und Schallschutz.

Ein wichtiges Einsatzgebiet ist die Herabsetzung des Lärmpegels in der Umgebung von Autobahnen, Schnellstrassen oder Eisenbahnlinien. Das Material lässt sich umwelt- und landschaftsfreundlich an Schallschutzwänden und Stützmauern anbringen, ohne dass das Landschaftsbild beeinträchtigt wird. Bei geeigneter Auftragsdicke und der sich ergebenden unebenen Oberflächenstruktur wird aufkommender Verkehrslärm merkbar verringert und reduziert.

An Fahrzeugen kann die Masse gleichzeitig als Antidröhnmasse und Korrosionsschutzüberzug eingesetzt werden.

Im Folgenden wird die Erfindung anhand von Beispielen näher erläutert:

*Beispiele:*

| Komponente A | | |
|---|---|---|
| 450 Gew.-Teile | Tonerdeschmelzzement |
| 450 Gew.-Teile | Portlandzement |
| 50 Gew.-Teile | pulverisierte Acrylfaser |
| 50 Gew.-Teile | Aluminiumpulver |
| **1000 Gew.-Teile** | **Komponente A** |

Die eingewogenen Rohstoffe werden in einem Trockenmischer homogen vermischt.

| Komponente B | | |
|---|---|---|
| 800 Gew.-Teile | wässerige, weichmacher freie anionische Dispersion eines Acrylsäureestercopolymerisats, Festkörpergehalt = 57 Gew.-% |
| 60 Gew.-Teile | pulverisierte Acrylfaser |
| 50 Gew.-Teile | Titandioxid (Rutil-Typ) |
| 85 Gew.-Teile | Wasser |
| 3 Gew.-Teile | mittelviskose Methylcellulose |
| 2 Gew.-Teile | Natronlauge 25%ig |
| **1000 Gew.-Teile** | **Komponente B** |

Die eingewogenen Rohstoffe werden unter einem Schnellrührer zusammengemischt, verteilt und gelöst.

Beide Komponenten sind lagerstabil.

Durch Mischung der Komponenten A und B im Gewichtsverhältnis 1:1, 1:2 und 1:3 wurden Massen hergestellt, deren Eigenschaften in der folgenden Tabelle wiedergegeben sind.

| Mischungsverhältnis Komponente A : Komponente B (Gew.-Teile) | Beispiel 1 | Beispiel 2 | Beispiel 3 |
|---|---|---|---|
| | 1:1 | 1:2 | 1:3 |
| Aufschäumvolumen vom Ausgangsvolumen = 1 | 1- bis 2fach | 3- bis 4fach | 5- bis 6fach |
| Festigkeit und Elastizität | zäh, hart, wenig elastisch | druckstabil mittelelastisch | weich gummiartig hochelastisch |
| Porigkeit und Zellstruktur | feinporig mit kaum sichtbarer Zellstruktur | grobporig mit gut erkennbarer Zellstruktur | grobporig mit ausgeprägter Zellstruktur |
| Aushärtungszeit zur Endfestigkeit | 2 bis 4 h je nach Temperatur und Luftfeuchtigkeit | 6 bis 10 h je nach Temperatur und Luftfeuchtigkeit | 12 bis 20 h je nach Temperatur und Luftfeuchtigkeit |
| Aufschäumzeit | ca. 5 min | 5 bis 10 min | 10 bis 15 min |

## Patentansprüche

1. Verfahren zur Herstellung einer druckfrei und porenhaltig härtenden wässerigen Masse ohne körnige Mörtelzuschlagstoffe durch Mischen einer Komponente (A) auf Basis eines hydraulischen Bindemittels und eines bei alkalischem pH-Wert gasabspaltenden Treibmittels mit einer Komponente (B) auf Basis eines Kunstharzes, dadurch gekennzeichnet, dass eine Komponente (B) auf Basis einer wässerigen alkalischen Kunstharzdispersion mit einem Festkörpergehalt von wenigstens 50 Gew.-% verwendet wird, mit der Massgabe, dass auf 1 Teil der Komponente (A) 0,5 bis 5 Gew.-Teile der Komponente (B) kommen.

2. Verfahren nach Anspruch 1, dadurch gekennzeichnet, dass als hydraulisches Bindemittel Zement verwendet wird.

3. Verfahren nach einem der Ansprüche 1 oder 2, dadurch gekennzeichnet, dass als gasabspaltendes Treibmittel Aluminiumpulver verwendet wird.

4. Verfahren nach einem der Ansprüche 1 bis 3, dadurch gekennzeichnet, dass als Kunstharzdispersion eine anionische Dispersion eines Acryl- und/oder Methacrylsäureestercopolymerisats verwendet wird.

5. Verfahren nach einem der Ansprüche 1 bis 4, dadurch gekennzeichnet, dass die Komponenten (A) und/oder (B) Kunststoff-, Cellulose-, Stahl-, Glas- und/oder Asbestfasern enthalten.

6. Verfahren nach einem der Ansprüche 1 bis 5, dadurch gekennzeichnet, dass die Komponenten (A) und/oder (B) anorganische und/oder organische Pigmente enthalten.

7. Verfahren nach einem der Ansprüche 1 bis 6, dadurch gekennzeichnet, dass die Komponenten (A) und (B) Verdickungsmittel und/oder Stabilisierungsmittel enthalten.

8. Verfahren nach einem der Ansprüche 1 bis 7, dadurch gekennzeichnet, dass die Komponente (A) 2,5 bis 5 Gew.-% Natriumaluminat enthält.

9. Verfahren nach einem der Ansprüche 1 bis 7, dadurch gekennzeichnet, dass die Komponente (A) 1 bis 5 Gew.-% Kalkhydrat enthält.

10. Verwendung der mit dem Verfahren hergestellten Masse gemäss einem der Ansprüche 1 bis 9 als Baustoff, als Füllmasse für Hohlräume, als Wärme- und Schalldämmasse, als Unterbodenschutz für Fahrzeuge und als Dränmaterial.

## Revendications

1. Procédé de production d'une matière aqueuse durcissant sans pression et sous forme poreuse, sans agrégats granulés pour mortier, par mélange d'un constituant (A) à base d'un liant hydraulique et d'un porogène libérant du gaz à un pH alcalin avec un constituant (B) à base d'une résine synthétique, caractérisé par le fait que l'on utilise un constituant (B) à base d'une dispersion aqueuse alcaline de résine synthétique ayant une teneur en solides d'au moins 50% en poids, avec cette règle que pour 1 partie du constituant (A), il y a 0,5 à 5 parties en poids du constituant (B).

2. Procédé selon la revendication 1, caractérisé par le fait que, comme liant hydraulique, on utilise du ciment.

3. Procédé selon l'une des revendications 1 ou 2, caractérisé par le fait que, comme porogène libérant du gaz, on utilise de la poudre d'aluminium.

4. Procédé selon l'une des revendications 1 à 3, caractérisé par le fait que, comme dispersion de résine synthétique, on utilise une dispersion anionique d'un produit de copolymérisation d'ester d'acide acrylique et/ou méthacrylique.

5. Procédé selon l'une des revendications 1 à 4, caractérisé par le fait que les constituants (A) et/ou (B) contiennent des fibres de matière synthétique, de cellulose, d'acier, de verre et/ou d'amiante.

6. Procédé selon l'une des revendications 1 à 5, caractérisé par le fait que les constituants (A) et/ou (B) contiennent des pigments minéraux et/ou organiques.

7. Procédé selon l'une des revendications 1 à 6, caractérisé par le fait que les constituants (A) et/ou (B) contiennent des épaississants et/ou des stabilisants.

8. Procédé selon l'une des revendications 1 à 7, caractérisé par le fait que le constituant (A) contient 2,5 à 5% en poids d'aluminate de sodium.

9. Procédé selon l'une des revendications 1 à 7, caractérisé par le fait que le constituant (A) contient 1 à 5% en poids de chaux hydratée.

10. Utilisation de la matière fabriquée par le procédé selon l'une des revendications 1 à 9 comme matériau de construction, comme masse de remplissage de cavité, comme matière calorifuge et insonorisante, comme protection de bas de caisse pour véhicules et comme matière de drainage.

**Claims**

1. Process for the preparation of an aqueous composition without granular mortar aggregate, which hardens without pressure to a porous product, by mixing a component (A) based on a hydraulic binder and a blowing agent which gives off gas at an alkaline pH value, with a component (B) based on a synthetic resin, characterised in that a component (B) based on an aqueous alkaline synthetic resin dispersion having a solids content of at least 50% by weight is used, with the proviso that 0.5 to 5 parts by weight of component (B) are provided per part of component (A).

2. Process according to Claim 1, characterised in that cement is used as the hydraulic binder.

3. Process according to Claim 1 or 2, characterised in that aluminium powder is used as the blowing agent which gives off gas.

4. Process according to one of Claims 1 to 3, characterised in that an anionic dispersion of an acrylic ester and/or methacrylic ester copolymer is used as the synthetic resin dispersion.

5. Process according to one of Claims 1 to 4, characterised in that the components (A) and/or (B) contain plastic fibres, cellulosic fibres, steel fibres, glass fibres and/or asbestos fibres.

6. Process according to one of Claims 1 to 5, characterised in that components (A) and/or (B) contain inorganic and/or organic pigments.

7. Process according to one of Claims 1 to 6, characterised in that the components (A) and (B) contain thickeners and/or stabilisers.

8. Process according to one of Claims 1 to 7, characterised in that the component (A) contains 2.5 to 5% by weight of sodium aluminate.

9. Process according to one of Claims 1 to 7, characterised in that the component (A) contains 1 to 5% by weight of hydrated lime.

10. Use of the composition prepared by the process according to one of Claims 1 to 9 as a building material, as a filling composition for cavities, as a heat and sound insulating composition, as an underseal for vehicles and as a drainage material.